(19) Europäisches Patentamt
European Patent Office
Office européen des brevets

(11) **EP 2 264 653 A1**

(12) **EUROPEAN PATENT APPLICATION**

(43) Date of publication:
**22.12.2010 Bulletin 2010/51**

(51) Int Cl.:
***G06N 99/00*** *(2010.01)*

(21) Application number: **09163305.7**

(22) Date of filing: **19.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Hitachi Ltd.**
**Chiyoda-ku**
**Tokyo (JP)**

(72) Inventors:
• **Andreev, Aleksey**
**Cambridge, CB3 0HE (GB)**

• **Williams, David**
**Cambridge, CB3 0HE (GB)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

Remarks:
Amended claims in accordance with Rule 137(2) EPC.

(54) **Qubit device**

(57)    A qubit device comprises at least one charge qubit (4, 5) including a qubit in a given state and gating means ($6_1$, $6_2$, $7_1$, $7_2$, $8_1$, $8_2$, $9_1$, $9_2$) for applying a pulse to the qubit for transforming the given state into a new state, wherein the gating means is configured to apply a pulse having zero or substantially zero electric potential gradient to at least part of the qubit.

Fig. 4

## Description

The present invention relates to a qubit device, such as a quantum computer.

EP 1 262 911 A and EP 1 860 600 A describe charge qubit devices. Although these devices can be used in quantum computing, their performance can be improved.

The present invention seeks to provide an improved qubit device.

According to the present invention there is provided a qubit device comprising at least one qubit including a qubit in a given state and gating means for applying a pulse to the qubit for transforming the given state into a new state, wherein the gating means is configured to apply a pulse having a zero or substantially zero electric potential gradient to at least part of the qubit.

The gating arrangement can help to reduce □quantum leakage□ (which places limits on the number of successive transformations that can be performed on the qubit before information is lost) by raising or lowering the potential of a part or whole of a qubit, but not modifying or distorting its potential profile.

In response to applying the pulse, the electrical potential of the at least part of the qubit may be non-zero.

The device may comprise first gating means for applying a first pulse to a first part of the qubit and a second, different gating means for applying a second pulse to a second different part of the qubit.

The gating means may comprise at least one gate electrode. The gating means may comprise two electrodes and wherein the qubit is disposed between the gate electrodes. The gating means may comprise more than two electrodes and wherein the qubit is disposed between the gate electrodes. The qubit and the electrodes may be arranged such that, in response to the same bias being applied to the electrodes, an electrical potential having a zero or substantially zero electrical potential gradient is applied to the at least part of the qubit.

The at least part of the qubit or the qubit may have a line of symmetry and the electrodes may be symmetric (e.g. in terms of position and/or shape) about the line of symmetry. Each electrode may have the same size and/or shape proximate to the qubit. The device may comprise a substrate, wherein the qubit and the at least one gate electrode are disposed on the substrate.

The qubit may comprise first and second quantum dots and the at least part of the qubit may comprise one of the quantum dots.

The qubit may be a charge qubit and/or a spin qubit.

The gating means may comprise means for emitting electromagnetic pulse signal(s) directed at the qubit, such as an antenna.

The gating means may be configured to apply a pulse such that quantum leakage is less than or equal to about $1 \times 10^{\square 4}$ or, preferably, less than or equal to about $1 \times 10^{\square 5}$.

The device may comprise first and second regions of semiconducting material configured to provide first and second quantum dots respectively and coupled by another region of semiconducting material so as to provide a first pair of coupled quantum dots and wherein the device comprises first gating means for applying a first pulse to the first semiconducting material region and a second, different gating means for applying a second pulse to the second semiconducting material region. The device may comprise further comprising third and fourth regions of semiconducting material configured to provide third and fourth quantum dots respectively and coupled by another region of semiconducting material so as to provide a second pair of coupled quantum dots, and further comprising an additional semiconducting region configured to provide a bridge between the first and second pairs of coupled quantum dots and wherein the device comprises third, different gating means for applying a third pulse to the third semiconducting material region and a fourth, different gating means for applying a fourth pulse to the second semiconducting material region.

According to a second aspect of the present invention there is provided a device comprising at least one qubit including a qubit in a given state and a gate arrangement for applying a pulse to the qubit for transforming the given state into a new state, wherein the gate arrangement is configured to apply a pulse having a zero or substantially zero electrical potential gradient to at least part of the qubit.

The gate arrangement may comprise at least one gate electrode.

According to a third aspect of the present invention there is provided apparatus comprising a device according to any preceding claim and circuitry configured to apply bias(es) to the generate said pulse.

If gate electrodes are used, the circuitry may be configured to apply the same bias to a set of gate electrodes which are used to apply a potential or pulse to the part of the qubit.

The circuitry may be configured to apply a pulse having a set duration, said pulse having a lower value of quantum leakage than a pulse having another, different duration.

Thus, applying a pulse of an appropriate duration can also help to reduce quantum leakage.

According to a fourth aspect of the present invention there is provided method comprising applying a pulse to a qubit for a given duration transforming a given state into a new state, wherein applying the pulse comprises applying a pulse having zero or substantially zero electrical potential gradient to at least part of the qubit.

The pulse may have a given duration, said pulse having a lower value of quantum leakage than a pulse having another, different duration.

The method may further comprise providing at least one qubit including the qubit.

Embodiments of the present invention will now be described, by way of example with reference to the accompanying drawings in which:

Figure 1 illustrates an isolated double quantum dot system which can be modelled so as to calculate the effect of quantum leakage;

Figures 2a to 2d are plots illustrating the dependence of quantum leakage on level number of an electron and electric field in an isolated double quantum dot system in which an electric pulse used to transform an initial state of the electron;

Figures 3a to 3d are grey-scale plots illustrating the dependence of quantum leakage on level number of an electron and duration of an electric pulse on an isolated double quantum dot system in which the electric pulse used to transform an initial state of the electron;

Figure 4 is a schematic plan view of a charge qubit device in accordance with the present invention;

Figure 5 is a schematic cross section view of the device shown in Figure 3;

Figure 6 is a plot of electric potential between a pair of gate electrodes in the device shown in Figure 4;

Figure 7 illustrates the effect of applying a pulse which has zero electric field on a quantum well;

Figure 8 illustrates the effect of applying a pulse which has non-zero electric field on a quantum well;

Figure 9 illustrates control circuitry; and

Figure 10 illustrates a method of performing an operation.

The basic element of a quantum computer is a qubit having two basis (or working) states. Ideally, a qubit state should be a superposition of only these two working states. In practice, however, there is usually at least one state and so the qubit state can be a superposition involving at least one other state.

Operation of a quantum computer involves transforming the state of a qubit into another state. This involves changing the superposition of the two working states. However, during such an operation in which at least one other state is involved, the qubit may acquire an admixture of other states. This is quantum leakage, a hitherto unappreciated problem, which detrimentally affects quantum computing. Quantum leakage places limits on the number of successive transformations that can be performed before information is lost, even in an ideal system in which states have infinite coherence times.

Quantum leakage can be understood in the following way.

In a qubit device, such as a quantum computer, a qubit can be defined as a superposition of working states, $|a\rangle$ and $|b\rangle$. Thus, at a given time, $t_1$, the state of the qubit can be defined as:

$$S(t_1) = a_1|a\rangle + b_1|b\rangle \qquad (1)$$

where $a_1$ and $b_1$ are complex numbers.

After an operation is performed on the qubit involving application of a pulse for a duration $t_p$, the state of a qubit at time $t_2$ in an ideal situation can be defined as:

$$S_{\mathrm{IDEAL}}(t_2 = t_1 + t_p) = a_2|a\rangle + b_2|b\rangle \qquad (2a)$$

where $a_2$ and $b_2$ are complex numbers.

However, in a real situation, the qubit at time $t_2$ acquires an admixture of other states, $|c\rangle$, of the qubit device and so the qubit state is:

$$S_{\mathrm{REAL}}(t_2 = t_1 + t_p) = a_2|a\rangle + b_2|b\rangle + c_2|c\rangle \qquad (2b)$$

where $c_2$ is a complex number.

A parameter, QL, which is equal to the square of the magnitude of the complex coefficient of the admixture of the other states, i.e. $QL = |c_2|^2$, defines the quantum leakage of the qubit state into other states. For successful operation of the qubit device, the value of QL should preferably be less than $10^{-4}$ for an elementary qubit operation.

The value of QL can be reduced by controlling the spatial variation of the electromagnetic field in the pulse. Additionally, the value of QL can be reduced by selecting the duration of the pulse for a particular pair of working states.

As will be explained in more detail later, to reduce quantum leakage in the quantum dot device described in EP 1 860 600 A, the device can be modified by providing pairs of side gates arranged symmetrically either side the quantum dots and applying the same signal to each electrode in a pair so that the electric potential profile inside the dots has the same spatial distribution before, during and after the pulse. Thus, applying the pulse raises or lowers the potential of the dots without affecting their shape.

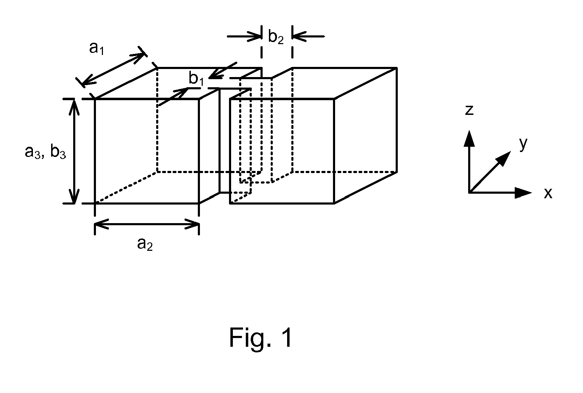

Figure 1 illustrates an isolated double quantum dot system providing a charge qubit which is modelled so as to simulate the effect of quantum leakage.

The double quantum dot system comprises two rectangular regions of silicon having sides $a_1$, $a_2$, $a_3$, where $a_1 = a_2 = 25$ nm and $a_3 = 30$ nm, connected by a bridge having sides $b_1$, $b_2$, $b_3$, where $b_1 = b_2 = 5$ nm and $b_3 = 30$ nm, surrounded by silicon dioxide.

Using a plane wave expansion method, the three-dimensional Schrödinger equation is solved for the double quantum system. Details of the method can be found in the references mentioned in EP 1 860 600 A *ibid.*.

The qubit has initial states $|A_i\rangle$, where i = 1, 2,, N,, L. In this case, L = 100. An electric pulse is applied to the double dot system for a duration $T_p$. The qubit is in a superposition of states $|A_i\rangle$ during the pulse, where i = 1, 2,,N,,L

If an electron in the double dot system is in a state $\Psi = |A_N\rangle$ before the pulse is applied, then the electron will be in a state $\Psi$ after the pulse is applied which is a superposition of all the states $|A_i\rangle$, i = 1, 2,,N,,L, defined by coefficients $C_{N1}$:

$$\Psi_N = \sum_i C_{Ni} |\Psi_i\rangle \qquad (3)$$

A degree, $\alpha_N$, of quantum leakage for each level, N, of the can be calculated using:

$$\alpha_N = \sum_{\substack{i \neq N \\ i \neq N+1}} |C_{Ni}|^2 \qquad (4)$$

The method can be used to calculate quantum leakage in terms of a probability that an electron, which occupies $N^{th}$ state before a pulse is applied, will be in a state other than $N^{th}$ or $(N+1)^{th}$ state after the pulse is applied.

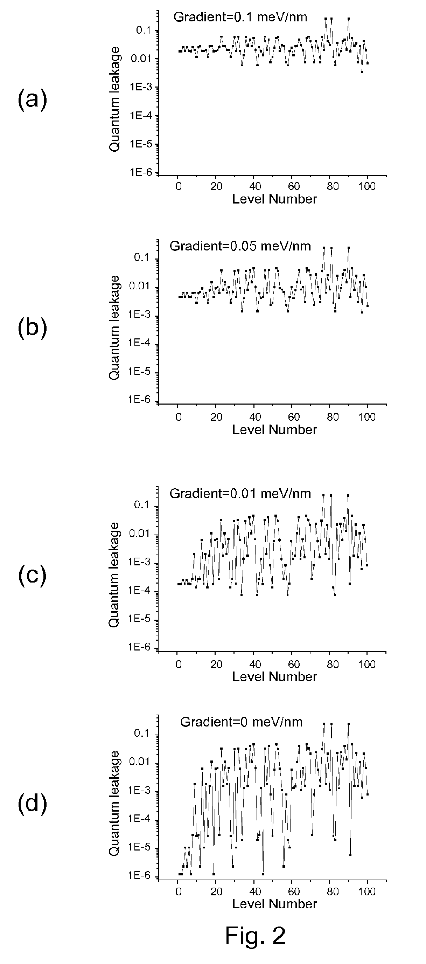

Figures 2a to 2d show dependence of quantum leakage degree, $\alpha_N$ (which is dimensionless parameter), on level number, N, and electric field, namely values of electric field of 0.1 meV/nm, 0.05 meV/nm, 0.01 meV/nm and no electric field (i.e. 0.00 meV/nm). The average pulse amplitude is the same for all pulses and is 1 meV. In Figures 2a to 2d the quantum leakage parameter $\alpha_N$ is averaged over duration of the pulse.

Figures 2a to 2d show that decreasing the electric field helps to reduce quantum leakage.

The system is modelled for a specific gate voltage (or qubit working point) before the pulse is applied so that the electric potential induced on the first dot is 0 meV and electric potential on the second dot is 10 meV. For this working point, not all level pairs can be chosen as qubit. It is clear that, for some levels, quantum leakage it still high even if there is no potential gradient. Thus, even these levels are not suitable for qubit operation for a given working point. However, if the number of electrons in system is fixed, then a suitable level for qubit operation can be found by choosing a working point using appropriate gate voltages.

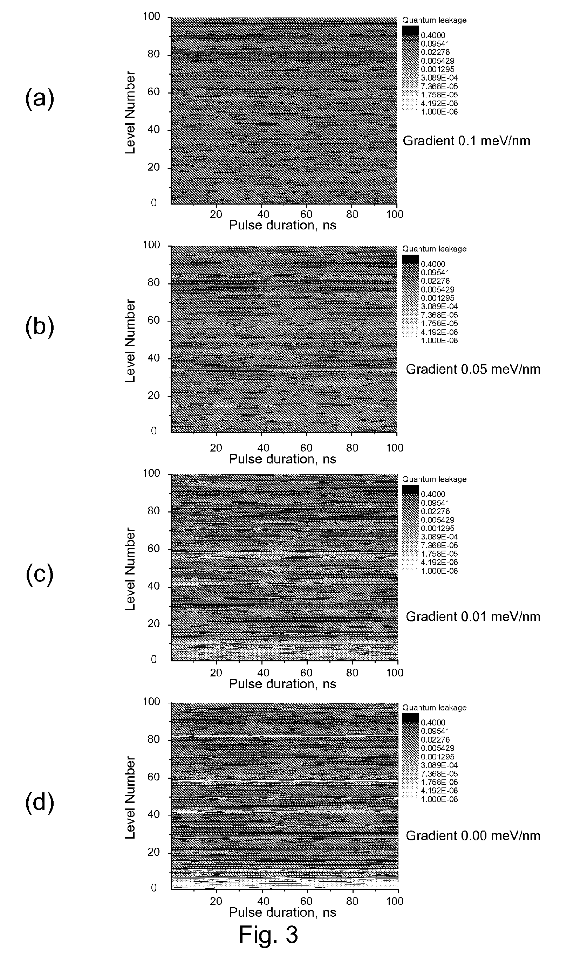

Figures 3a to 3d show dependence of quantum leakage degree, $\alpha_N$, on level number, N, and pulse duration for different values of electric field, namely values of electric field of 0.1 meV/nm, 0.05 meV/nm, 0.01 meV/nm and no electric field.

Figures 3a to 3d show that, for a given level, quantum leakage also depends on pulse duration.

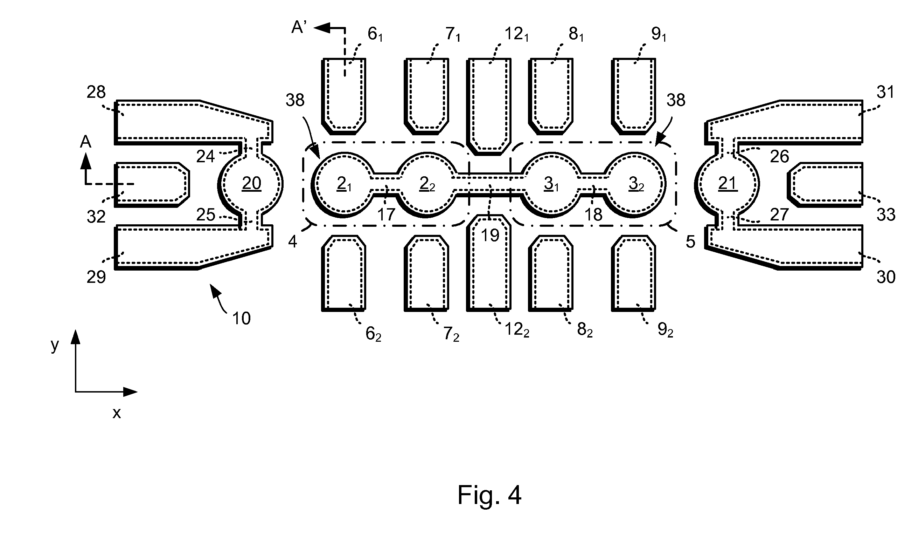

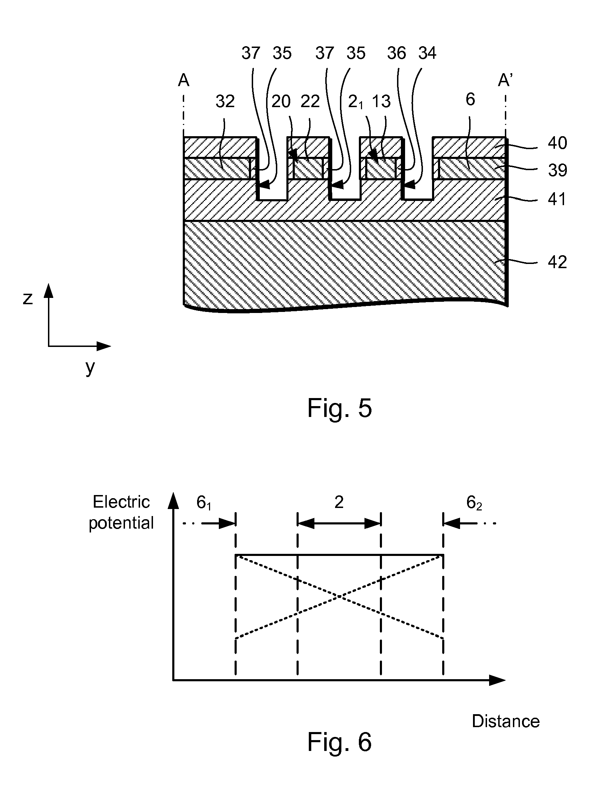

Referring to Figures 4 and 5, a device in accordance with the present invention is shown.

The gating arrangement, in particular the gate geometry, of the devices described in EP 1 860 600 A *ibid.* (which is incorporated herein by reference) is modified so as to minimise quantum leakage and, in the following description, the same reference numerals are used here as those used in EP 1 860 600 A *ibid.* when referring to the same feature.

The device is formed by trench isolation (e.g. electron beam lithography and dry etching) and includes first and second double quantum dots for defining first and second qubits 4, 5 respectively.

The device includes pairs of gates $6_1$, $6_2$, $7_1$, $7_2$, $8_1$, $8_2$, $9_1$, $9_2$. Each quantum dot is $2_1$, $2_2$, $3_1$, $3_2$ is provided with a pair of gates $6_1$, $6_2$, $7_1$, $7_2$, $8_1$, $8_2$, $9_1$, $9_2$ either side of the quantum dot so that the quantum dot is equidistant from each electrode in one pair.

The device includes first and second electrometers 10, 11 in the form of single-electron transistors 10, 11 for measuring charge on the charge on the left-hand quantum dot $2_1$ of the first double quantum dot 2 and on the right-hand quantum dot $3_2$ of the second double quantum dot 3 respectively.

The device also includes additional side gates 12 for applying an electric potential to the double quantum dots 2, 3.

The device includes regions 13, 14, 15, 16, 17, 18 of semiconductor material which provide the double quantum dots 2, 3, coupling regions 17, 18 and a bridge region 19. In this example, the regions 13, 14, 15, 16, 17, 18 comprise n-type single crystal silicon.

As explained in EP 1 860 600 A *ibid.*, the coupling regions 17, 18 are sufficiently wide that they are not fully depleted and so provide conductive bridges.

As shown in Figure 4, the single-electron transistors 10, 11 are arranged end on at the end of the line or chain of dots 2, 3 (as opposed to side on, as used in EP 1 860 600 A *ibid*) so as to make space and allow pairs of gates $6_1$, $6_2$, $7_1$, $7_2$, $8_1$, $8_2$, $9_1$, $9_2$ to be used.

As shown in Figure 5, conductive regions of the device 1 are laterally defined by etched sidewalls 34, 35 and flanking regions of silicon dioxide 36, 37. The quantum dot forming regions 13, 14, 15, 16 and coupling regions 17, 18, 19 are bounded by a region 36 of silicon dioxide running along etched sidewall 34 which defines a mesa 38. Likewise, the quantum dot forming regions 20, 21, constrictions 24, 25, 26, 27, gates 6, 7, 8, 9, 12, 32, 33 and leads 28, 29, 30, 31 are bounded by silicon dioxide regions 37 running along etched sidewalls 35.

Further details about the structure and method of fabricating the device can be found in EP 1 860 600 A *ibid.* which is incorporated herein by reference.

Taking the example of the first set of gates $6_1$, $6_2$, in each set (in this case in each pair), the gates $6_1$, $6_2$ are identical in shape, orientation and/or size (at least in the vicinity of the qubit) but inverted with respected to one another so as to provide the same, but complementary, electric fields when the same bias is applied to each gate $6_1$, $6_2$ and thus apply an electrical potential having zero gradient to the quantum dot $2_1$.

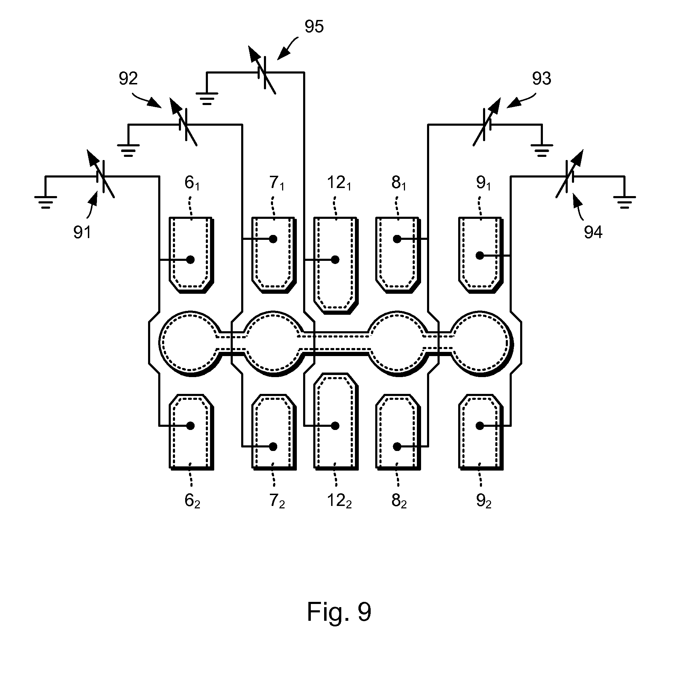

The quantum dots $2_1$, $2_2$, $3_1$, $3_2$ each have their own line of symmetry or share a common line of symmetry. The line of symmetry may depend not only on the shape of the semiconducting region 13, 14, 15,16 forming the quantum dot, but also on the position of the coupling region 17, 18, 19 leading into or out of the quantum dot. In this example, a longitudinal axis L (Figure 9) is common to the quantum dots $2_1$, $2_2$, $3_1$, $3_2$ and defines lines of symmetry for each quantum dot $2_1$, $2_2$, $3_1$, $3_2$. In this example, the line of symmetry runs along the y-axis.

For each quantum dots $2_1$, $2_2$, $3_1$, $3_2$, the gates $6_1$, $6_2$, $7_1$, $7_2$, $8_1$, $8_2$, $9_1$, $9_2$ are symmetric (in position and shape) about the line of symmetry. The gates $6_1$, $6_2$, $7_1$, $7_2$, $8_1$, $8_2$, $9_1$, $9_2$ run perpendicularly to the line of symmetry.

The gates need not be symmetric and/or need not have the same shape, orientation and/or size further away from the qubit, for example, further than a distance, 1, from the qubit, where 1 is about two or three times separation, s, between the qubit and the gate electrode (i.e. 1 >>s).

Symmetric gates which are the same size and shape (at least proximate to the qubit, within the distance 1) can help to minimise the occurrence of unequal electric fields and, thus, reduce the electrical potential gradient between the gates when the same bias is applied to each gate.

Figure 6 shows a simplified plot of electric potential arising from applying the same bias to each gate electrode $6_1$, $6_2$. As shown in the Figure 6, the effect of the split gates $6_1$, $6_2$ is to apply a pulse which has zero (or substantially zero) electric potential gradient to the quantum dot $2_1$.

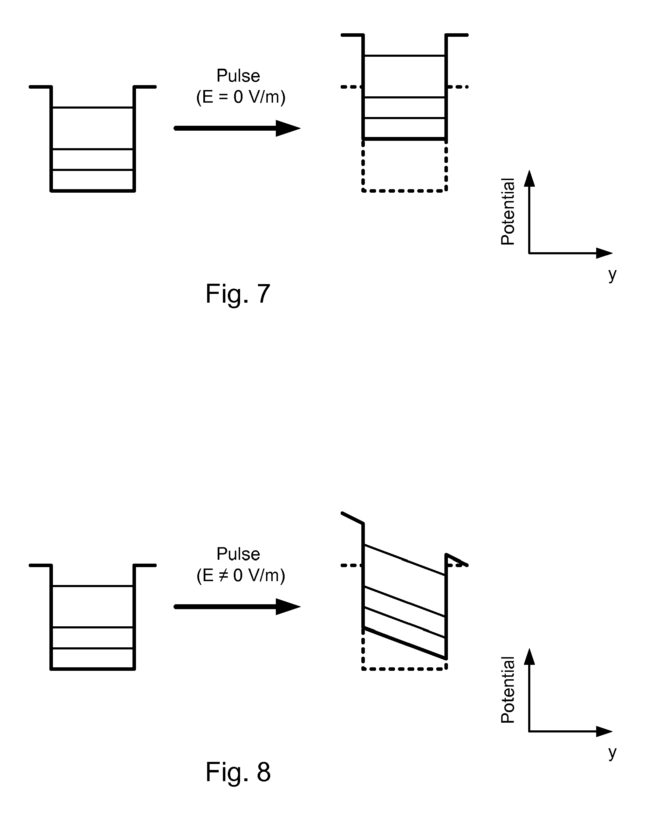

Figure 7 shows illustrates schematically the result of applying such an electric pulse, namely raising (or lowering depending on the bias used) the potential of the quantum dot 21, but without changing its potential profile.

By contrast, Figure 8 shows the result of applying a bias to a single electrode or applying unequal biases to a pair of electrodes. As shown in Figure 8, the effect is not only to raise or lower the potential profile but also to distort, e.g. skew, the profile. This distortion is considered to be the source of quantum leakage.

Referring to Figure 9, control and measurement circuitry 90 includes voltage sources 91, 92, 93, 94, 95 for applying a bias to each pair of electrodes $6_1$, $6_2$, $7_1$, $7_2$, $8_1$, $8_2$, $9_1$, $9_2$. For clarity, the rest of circuitry 90 is not shown, although the same arrangement as that described in EP 1 860 600 A *ibid.* can be used.

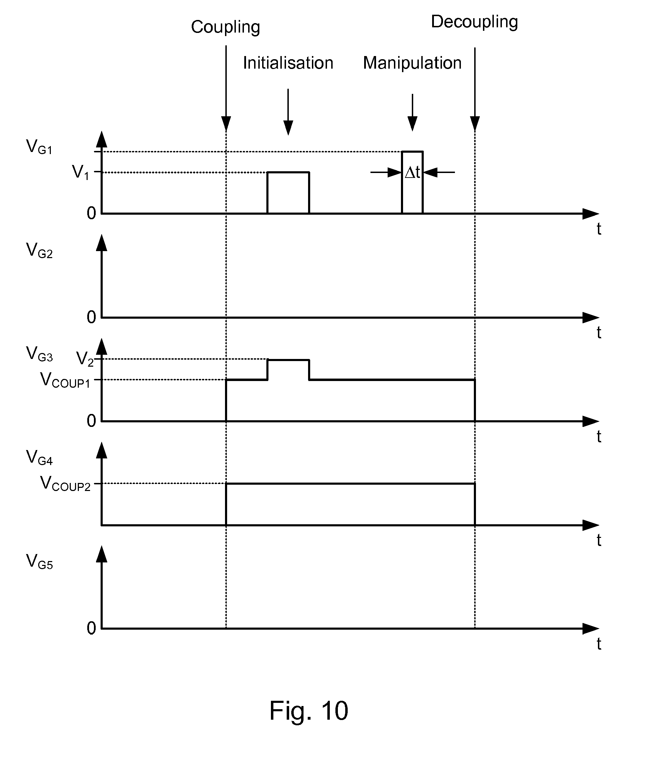

Referring to Figure 10, the same process as that described in EP 1 860 600 A *ibid.* can be used for preparing, manipulating and measuring the qubits 4, 5.

It will be appreciated that many modifications may be made to the embodiments hereinbefore described.

For example, other gate electrode arrangements can be used. For example, electrodes may be place above and below the quantum dot. A single electrode can be used which is formed around the quantum dot. More than two symmetrically arranged electrodes can be used. If the spaces between the dot and each electrode is filled with different dielectric material so as to distort the electrical symmetry of the device, then different biases can be applied to the gates to compensate for the asymmetry.

Also, other gating arrangements can be used. For example, antennas or other sources of microwaves can be used instead of gates for generating electromagnetic pulses.

Other types of qubits can be used. For example, spin qubits, such as a quantum dot nitrogen formed in a semiconductor material or a vacancy in diamond, can be used. Other device configurations (e.g. different numbers of qubits and arrangement of qubits), such as those described in EP 1 860 600 A *ibid.* can be used. Different materials, e.g. other than silicon, can be used.

**Claims**

1.  A device comprising:

    at least one qubit (4, 5) including a qubit (4) in a given state; and
    gating means ($6_1$, $6_2$) for applying a pulse to the qubit for transforming the given state into a new state;
    **characterised in that** the gating means ($6_1$, $6_2$) is configured to apply a pulse having a zero or substantially zero electrical potential gradient to at least part of the qubit.

2.  A device according to claim 1, wherein, in response to applying the pulse, the electrical potential of the at least part of the qubit is non-zero.

3.  A device according to claim 1 or 2, comprising first gating means ($6_1$, $6_2$) for applying a first pulse to a first part ($2_1$) of the qubit and a second, different gating means for applying a second pulse to a second different part of the qubit.

4.  A device according to any preceding claim, wherein the gating means ($6_1$, $6_2$) comprises at least one gate electrode.

5.  A device according to any preceding claim, wherein the gating means ($6_1$, $6_2$) comprises two electrodes and wherein the qubit is disposed between the gate electrodes.

6.  A device according to any preceding claim, wherein the gating means ($6_1$, $6_2$) comprises more than two electrodes and wherein the qubit is disposed between the gate electrodes.

7.  A device according to claim 5 or 6, wherein the qubit (4) and the electrodes ($6_1$, $6_2$) are arranged such that, in response to the same bias being applied to the electrodes, an electrical potential having a zero or substantially zero electrical potential gradient is applied to the at least part of the qubit.

8.  A device according to any one of claims 4 to 7, wherein the at least part of the qubit ($2_1$) or the qubit (4) has a line of symmetry (L) and the electrodes ($6_1$, $6_2$) are symmetric about the line of symmetry.

9.  A device according to any one of claims 4 to 8, wherein each electrode ($6_1$, $6_2$) has the same size and/or shape proximate to the qubit (4).

10. A device according to any one of claims 4 to 9, comprising a substrate (42), wherein the qubit and the at least one gate electrode are disposed on the substrate.

11. A device according to any preceding claim, wherein the qubit (4) comprises first and second quantum dots ($2_1$, $2_2$) and wherein the at least part of the qubit comprises one of the quantum dots.

12. A device according to any preceding claim, wherein the qubit is a charge qubit.

**EP 2 264 653 A1**

13. A device according any preceding claim, wherein the qubit is a spin qubit.

14. A device according to any preceding claim, wherein the gating means comprises means for emitting electromagnetic pulse signal(s) directed at the qubit, such as an antenna.

15. A device according to any preceding claim, wherein the gating means $(6_1, 6_2)$ is configured to apply a pulse such that quantum leakage is less than or equal to about $1 \times 10^{\square 4}$ or, preferably, less than or equal to about $1 \times 10^5$.

16. A device according to any preceding claim, comprising first and second regions (13, 14) of semiconducting material configured to provide first and second quantum dots $(2_1, 2_2)$ respectively and coupled by another region (17) of semiconducting material so as to provide a first pair of coupled quantum dots and wherein the device comprises first gating means $(6_1, 6_2)$ for applying a first pulse to the first semiconducting material region and a second, different gating means for applying a second pulse to the second semiconducting material region.

17. A device according to claim 16, further comprising third and fourth regions (15, 16) of semiconducting material configured to provide third and fourth quantum dots $(3_1, 3_2)$ respectively and coupled by another region (18) of semiconducting material so as to provide a second pair of coupled quantum dots, and further comprising an additional semiconducting region (19) configured to provide a bridge between the first and second pairs of coupled quantum dots and wherein the device comprises third, different gating means $(8_1, 8_2)$ for applying a third pulse to the third semiconducting material region and a fourth, different gating means $(9_1, 9_2)$ for applying a fourth pulse to the second semiconducting material region.

18. A device comprising:

at least one qubit including a qubit in a given state; and
a gate arrangement for applying a pulse to the qubit for transforming the given state into a new state;
wherein the gate arrangement is configured to apply a pulse having a zero or substantially zero electrical potential gradient to at least part of the qubit.

19. A device according to claim 18, wherein the gate arrangement comprises at least one gate electrode.

20. Apparatus comprising:

a device according to any preceding claim; and
circuitry (90) configured to apply bias(es) to the generate said pulse.

21. Apparatus according to claim 20, wherein the circuitry (90) is configured to apply a pulse having a set duration, said pulse having a lower value of quantum leakage than a pulse having another, different duration.

22. A method comprising:

applying a pulse to a qubit for a given duration transforming a given state into a new state;
wherein applying the pulse comprises applying a pulse having zero or substantially zero electrical potential gradient to at least part of the qubit.

23. A method according to claim 22, wherein the pulse has a given duration, said pulse having a lower value of quantum leakage than a pulse having another, different duration.


**Amended claims in accordance with Rule 137(2) EPC.**

1. A device comprising:

at least one charge or spin qubit (4, 5) including a qubit (4) in a given state; and
gating means $(6_1, 6_2)$ comprising at least one gate electrode for applying an electric field pulse to the qubit for transforming the given state into a new state;
**characterised in that** the gating means $(6_1, 6_2)$ is configured to apply an electric field pulse having a zero or substantially zero electrical potential gradient to at least part of the qubit such that quantum leakage is less than

7

or equal to about $1 \times 10^{-4}$.

**2.** A device according to claim 1, wherein, in response to applying the pulse, the electrical potential of the at least part of the qubit is non-zero.

**3.** A device according to claim 1 or 2, comprising first gating means ($6_1$, $6_2$) for applying a first pulse to a first part ($2_1$) of the qubit and a second, different gating means for applying a second pulse to a second different part of the qubit.

**4.** A device according to any preceding claim, wherein the gating means ($6_1$, $6_2$) comprises two electrodes and wherein the qubit is disposed between the gate electrodes.

**5.** A device according to any preceding claim, wherein the gating means ($6_1$, $6_2$) comprises more than two electrodes and wherein the qubit is disposed between the gate electrodes.

**6.** A device according to claim 4 or 5, wherein the qubit (4) and the electrodes ($6_1$, $6_2$) are arranged such that, in response to the same bias being applied to the electrodes, an electrical potential having a zero or substantially zero electrical potential gradient is applied to the at least part of the qubit.

**7.** A device according to any preceding claim, wherein the at least part of the qubit ($2_1$) or the qubit (4) has a line of symmetry (L) and the electrodes ($6_1$, $6_2$) are symmetric about the line of symmetry.

**8.** A device according to any one preceding claim, wherein each electrode ($6_1$, $6_2$) has the same size and/or shape proximate to the qubit (4).

**9.** A device according to any one preceding claim, comprising a substrate (42), wherein the qubit and the at least one gate electrode are disposed on the substrate.

**10.** A device according to any preceding claim, wherein the qubit (4) comprises first and second quantum dots ($2_1$, $2_2$) and wherein the at least part of the qubit comprises one of the quantum dots.

**11.** A device according to any preceding claim, wherein the gating means ($6_1$, $6_2$) is configured to apply an electric field pulse such that quantum leakage is less than or equal to about $1 \times 10^{-5}$.

**12.** A device according to any preceding claim, comprising first and second regions (13, 14) of semiconducting material configured to provide first and second quantum dots ($2_1$, $2_2$) respectively and coupled by another region (17) of semiconducting material so as to provide a first pair of coupled quantum dots and wherein the device comprises first gating means ($6_1$, $6_2$) for applying a first pulse to the first semiconducting material region and a second, different gating means for applying a second pulse to the second semiconducting material region.

**13.** A device according to claim 12, further comprising third and fourth regions (15, 16) of semiconducting material configured to provide third and fourth quantum dots ($3_1$, $3_2$) respectively and coupled by another region (18) of semiconducting material so as to provide a second pair of coupled quantum dots, and further comprising an additional semiconducting region (19) configured to provide a bridge between the first and second pairs of coupled quantum dots and wherein the device comprises third, different gating means ($8_1$, $8_2$) for applying a third pulse to the third semiconducting material region and a fourth, different gating means ($9_1$, $9_2$) for applying a fourth pulse to the second semiconducting material region.

**14.** Apparatus comprising:

a device according to any preceding claim; and
circuitry (90) configured to apply bias(es) to the generate said pulse.

**15.** Apparatus according to claim 14, wherein the circuitry (90) is configured to apply a pulse having a set duration, said pulse having a lower value of quantum leakage than a pulse having another, different duration.

**16.** A method comprising:

applying an electric field pulse to a charge or spin qubit for a given duration transforming a given state into a new state;
wherein applying the pulse comprises applying a pulse having zero or substantially zero electrical potential gradient to at least part of the qubit such that quantum leakage is less than or equal to about $1 \times 10^{-4}$.

**17.** A method according to claim 27, wherein the pulse has a given duration, said pulse having a lower value of quantum leakage than a pulse having another, different duration.

Fig. 1

(a)

(b)

(c)

(d)

Fig. 2

(a)

Gradient 0.1 meV/nm

(b)

Gradient 0.05 meV/nm

(c)

Gradient 0.01 meV/nm

(d)

Gradient 0.00 meV/nm

Fig. 3

Fig. 4

Fig. 5

Fig. 6

Pulse
(E = 0 V/m)

Potential

y

Fig. 7

Pulse
(E ≠ 0 V/m)

Potential

y

Fig. 8

Fig. 9

Fig. 10

Europäisches
Patentamt
European
Patent Office
Office européen
des brevets

# EUROPEAN SEARCH REPORT

Application Number

EP 09 16 3305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 6 930 318 B2 (VION DENIS [FR] ET AL) 16 August 2005 (2005-08-16)<br>* column 13, line 33 - column 15, line 12; figures 7,8 * | 1-14, 16-20,22<br>15,21,23 | INV.<br>G06N99/00 |
| A | US 2002/179897 A1 (ERIKSSON MARK A [US] ET AL) 5 December 2002 (2002-12-05)<br>* paragraph [0035] *<br>* paragraph [0052] - paragraph [0054] *<br>* paragraph [0081] - paragraph [0082]; figures 1,6,20-22 * | 1-23 | |
| A | FAZIO R ET AL: "Fidelity and leakage of Josephson qubits"<br>PHYSICAL REVIEW LETTERS APS USA,<br>vol. 83, no. 25,<br>20 December 1999 (1999-12-20), pages 5385-5388, XP002572395<br>ISSN: 0031-9007<br>* abstract * | 1-23 | |
| A | BYRD M S ET AL: "Universal leakage elimination"<br>PHYSICAL REVIEW A (ATOMIC, MOLECULAR, AND OPTICAL PHYSICS) APS THROUGH AIP USA,<br>vol. 71, no. 5, May 2005 (2005-05), pages 52301-1, XP002572396<br>ISSN: 1050-2947<br>* the whole document * | 1-23 | TECHNICAL FIELDS SEARCHED (IPC)<br><br>G06N |
| A | ONO K ET AL: "Spin selective tunneling and blockade in two-electron double quantum dot"<br>PHYSICA STATUS SOLIDI C WILEY-VCH GERMANY,<br>no. 4, 2003, pages 335-340, XP002572397<br>ISSN: 1610-1634<br>* figure 1 * | 1 | |

The present search report has been drawn up for all claims

| Place of search | Date of completion of the search | Examiner |
|---|---|---|
| The Hague | 16 March 2010 | Schenkels, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 16 3305

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2010

| Patent document cited in search report | | Publication date | Patent family member(s) | | Publication date |
|---|---|---|---|---|---|
| US 6930318 | B2 | 16-08-2005 | CA | 2453126 A1 | 07-05-2005 |
| | | | EP | 1690218 A2 | 16-08-2006 |
| | | | FR | 2862151 A1 | 13-05-2005 |
| | | | WO | 2005048183 A2 | 26-05-2005 |
| | | | JP | 2007516610 T | 21-06-2007 |
| | | | US | 2005098773 A1 | 12-05-2005 |
| US 2002179897 | A1 | 05-12-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1262911 A

- EP 1860600 A